# EUROPÄISCHE PATENTSCHRIFT

(11) **EP 1 299 258 B1**
(45) Veröffentlichungstag und Bekanntmachung des Hinweises auf die Patenterteilung: **24.11.2010**
(21) Anmeldenummer: 01965048.0
(22) Anmeldetag: 28.06.2001
(51) Int. Cl.: B60K 15/03, B65D 1/00, C08F 10/02, C08F 4/24

(54) **KUNSTSTOFFHOHLKÖRPER AUS HOCHDICHTEN POLYOLEFINEN HERGESTELLT MIT EINEM FLUORMODIFIZIERTEN CHROM-KATALYSATOR**
PLASTIC HOLLOW BODY MADE OF HIGH DENSITY POLYOLEFINS PRODUCED BY MEANS OF A FLUORO-MODIFIED CHROME CATALYST
CORPS CREUX EN PLASTIQUE CONSTITUE DE POLYOLEFINES A DENSITE ELEVEE REALISEES AU MOYEN D'UN CATALYSEUR AU CHROME MODIFIE AU FLUOR

(30) Priorität: 13.07.2000 DE 10034191
(43) Veröffentlichungstag der Anmeldung: 09.04.2003
(73) Patentinhaber: Basell Polyolefine GmbH, 50389 Wesseling (DE)
(72) Erfinder: MIHAN, Shahram, 67061 Ludwigshafen (DE); RHODE, Wolfgang, 67346 Speyer (DE); BEUERMANN, Ilka, 50259 Pulheim-Sinthern (DE); SPRINGHOLZ, Bernhard, 67547 Worms (DE)
(86) Internationale Anmeldenummer: PCT/EP2001/007409
(87) Internationale Veröffentlichungsnummer: WO 2002/006073

(56) Entgegenhaltungen:
- EP-A- 0 555 741
- EP-A- 0 626 256
- EP-A- 0 645 400
- EP-A- 0 849 293
- WO-A-97/08213
- US-A- 4 596 862

## Beschreibung

Die vorliegende Erfindung betrifft Kunststoffhohlkörper, die unter Verwendung spezieller Polyolefin-Werkstoffe mit ein- oder mehrschichtigem Aufbau hergestellt werden und erhöhte Bauteilfestigkeit zeigen.

Ferner betrifft die vorliegende Erfindung die Verwendung derartiger Kunststoffhohlkörper mit erhöhter Bauteilfestigkeit als Kraftstoffbehälter im Automobilbau.

Für die Lagerung und den Transport flüssiger Gefahrstoffe sind Kunststoffhohlkörper seit langem bekannt. Insbesondere im Fahrzeugbau haben Kunststoffhohlkörper in Form von Kraftstofftanks, die früher üblichen Tanks aus metallischen Werkstoffen nahezu vollständig verdrängt. Aber auch tragbare Behälter aller Art, beispielsweise Benzinkanister, Kunststoffflaschen für brennbare Flüssigkeiten, Gefahrstoffe und dergleichen werden heute fast ausschließlich aus Kunststoffen hergestellt. Der besondere Vorteil von Kunststoffbehältern und -tanks liegt vor allem im geringeren Gewicht-/Volumenverhältnis, der Vermeidung von Korrosionsproblemen sowie insbesondere beim Fahrzeugbau in besseren Crash-Eigenschaften.

Kunststoffhohlkörper werden in vielen Fällen aus Polyolefinen, meistens aus hochdichtem Polyethylen (HDPE) im Wege der Blasformung hergestellt. Der Nachteil derartiger Polyethylenbehältnisse liegt vor allen Dingen in deren geringeren Barrierewirkung hinsichtlich der Permeation eingefüllter Inhaltsstoffe. Für Automobile werden strenge gesetzliche Anforderungen zur Vermeidung ozonbildender Emissionen, z.B. Kraftstoffe, aufgestellt. Die geringe Barrierewirkung der Polyolefine gegenüber der Permeation leicht flüchtiger Stoffe erfordert daher in der Regel zusätzliche Maßnahmen der Permeationsminderung, von denen die wichtigsten die Fluorierung der Behälteroberfläche oder das Einbringen einer Sperrschicht aus einem polaren Barriere-Kunststoff sind. Derartige Sperrschichten werden im Stand der Technik zumeist durch sogenannte Mehrschicht-Coextrusionsblasformverfahren in die Behälterwand eingebracht.

Barriereschichten wiederum führen dazu, daß die mittels Coextrusionsblasformen hergestellten Behälter zumeist geringere mechanische Festigkeit zeigen. Insbesondere gegenüber Schockbeanspruchungen in der Kälte sind sperrschichthaltige Behälter gegenüber unbeschichteten Polyethylenbehältern hoher Dichte anfälliger.

Besondere Probleme ergeben sich insbesondere beim Bau von Kunststoffkraftstoffbehältern aus Polyethylen. Als sicherheitsrelevantes Bauteil werden an Kunststoffkraftstoffbehälter im Automobilbau besonders hohe Anforderungen in Bezug auf Bauteilfestigkeit, Crash-Eigenschaften und Brandfestigkeit gestellt. Demzufolge besteht besonders im Kunststoffkraftstoffbehälterbau ein Bedarf nach Werkstoffen, welche die speziellen Anforderungen an diese Art von Bauteilen erfüllen.

Die europäische Patentschrift EP 0 645 400 beschreibt Kunststoffkraftstoffbehälter unter Verwendung neuartiger Polyethylene mit besonderen Eigenschaften. Wesentliches Merkmal dieser Materialien ist ein mittels des dort beschriebenen dimensionslosen R-Wertes charakterisiertes Dehnviskositätsverhältnis. Nach Aussage der EP 0 645 400 erreichen geeignete Polyethylenmaterialien R-Werte von mindestens 2,5. Der Nachteil dieser Materialien sind die aufgrund der zur Erreichung der hohen R-Werte erforderlichen hohen Molmassen der Produkte. Hierdurch wird insbesondere das Verarbeitungsverhalten beeinträchtigt, indem entweder der Durchsatz limitiert ist oder aber hohe Massedrücke auftreten. Desweiteren neigen Produkte gemäß der EP 0 645 400 verstärkt zur Ausbildung von Fließanomalien, welche zu Dünnstellen im Fertigteil führen können.

Demnach besteht ein erheblicher Bedarf nach neuen Polyolefinmaterialien, insbesondere Polyethylen, mit denen sich Kunststoffhohlkörper mit erhöhter Bauteilfestigkeit erzeugen lassen, ohne daß darunter die Verarbeitungseigenschaften gegenüber den für diese Anwendungen derzeit üblichen Materialien verschlechtert werden.

Es ist bekannt, daß sich die Polymereigenschaften von Polyolefinen in weiten Bereichen durch die Art und Struktur des verwendeten Polymerisationskatalysators und des verwendeten Trägermaterials verändern und bestimmen lassen. Die Zusammensetzung des Katalysatorträgers und des katalytisch aktiven Materials darauf, seine Struktur, und die Aktivierungsbedingungen haben einen entscheidenden Einfluß auf die Leistung des Katalysators im Polymerisationsverfahren, die Aktivität des Katalysators, die Struktur und die Eigenschaften des entstehenden Polymers. Kleinste Änderungen der Zusammensetzung oder Struktur sowohl des katalytisch aktiven Materials, als auch des Trägermaterials führen daher häufig zu überraschenden Effekten.

Aus der US-Patentschrift 3,130,188 ist beispielsweise bekannt, daß mit anorganischen Fluoriden wie beispielsweise Ammoniumhexafluorosilicat modifizierte Kieselgel-geträgerte Chromoxid-Katalysatoren eine erhöhte Polymerisationsaktivität aufweisen, und das erhaltende Polyethylen eine enge Molekulargewichtsverteilung aufweist.

Aufgabe der vorliegenden Erfindung ist die Herstellung von Kunststoffhohlkörpern unter Verwendung neuartiger Polyolefin-Werkstoffe, welche eine erhöhte Bauteilfestigkeit ergeben, und die vorgenannten Nachteile des Standes der Technik überwinden.

Ferner ist es Aufgabe der vorliegenden Erfindung, Kunststoffhohlkörper mit verbesserten Eigenschaften unter Verwendung neuartiger Polyolefin-Werkstoffe zur Verfügung zu stellen, die ohne wesentliche Veränderung der Werkstoff-Verarbeitungseigenschaften gegenüber jenen üblicher Standardmaterialien herstellbar sind.

Insbesondere ist es Aufgabe der vorliegenden Erfindung Kunststoffkraftstoffbehälter mit erhöhter Bauteilfestigkeit unter Verwendung neuer Polyethylen-Werkstoffe bereitzustellen.

Die Aufgabe der vorliegenden Erfindung wird gelöst durch einen Kunststoffhohlkörper, der mindestens eine Öffnung aufweist, dadurch gekennzeichnet, daß der Kunststoffhohlkörper mit mehrschichtigem Aufbau mindestens eine Schicht aus einem Polyolefin mit einer Dichte im Bereich zwischen 0,943 und 0,955 g/cm³ und einer Schmelzfließrate MFR (190°C/21,6 kg) von 2 bis 8 g/10 Minuten aufweist, das mit in Luft aktivierten Kieselgel-geträgerten Chrom-Katalysatoren hergestellt wurde, die mit geeigneten anorganischen Fluorierungsmitteln bei der Herstellung von Katalysatorvorstufen oder während des Aktivierungsschrittes modifiziert werden.

Vorteilhafte Ausführungsformen ergeben sich durch Kombination mit den Merkmalen der abhängigen Unteransprüche.

Überraschenderweise hat sich gezeigt, daß durch den Einsatz der beschriebenen Chrom-Katalysatoren vom Phillips-Typ Polyolefine hergestellt werden können, deren Eigenschaftsprofil sich in idealer Weise für die Anwendung in Kunststoffholkörpern eignet. Es wurde gefunden, daß unter Verwendung der beschriebenen Chrom-Katalysatoren Polyolefin-Werkstoffe hergestellt werden können, die ein ausgewogenes Verhältnis von Spannungsrißbeständigkeit zu Schlagzähigkeit aufweisen. Es werden Polymere erhalten, die eine hohe Spannungsrißbeständigkeit bei gleichzeitig hoher Schlagzähigkeit aufweisen. Dies ist besonders überraschend, da sich diese Eigenschaften üblicherweise genau gegensätzlich verhalten, d.h. bei erhöhter Spannungsrißbeständigkeit sinkt die Schlagzähigkeit ab, und umgekehrt. Diese ungewöhnlichen Eigenschaften von Polyolefinen, die mittels der beschriebenen Chrom-Katalysatoren hergestellt wurden, sind bei der Herstellung von erfindungsgemäßen Kunststoffhohlkörpern besonders vorteilhaft einsetzbar.

Mit Hilfe der beschriebenen Chrom-Katalysatoren hergestellte Polyolefin-Werkstoffe verleihen bei der Verwendung in Kunststoffhohlkörpern, insbesondere bei Kunststoffkraftstoffbehältern, diesen aufgrund der hohen Spannungsrißbeständigkeit und der hohen Schlagzähigkeit überraschenderweise eine ausgezeichnete Bauteilfestigkeit bei gleichzeitig guten Verarbeitungsbedingungen des Werkstoffs.

Besonders bei der Anwendung in mehrschichtigen Kunststoffhohlkörpern, die eine permeationsmindernde Barriereschicht enthalten, wirkt sich die Verwendung erfindungsgemäßer Polyolefine in dem Stand der Technik überlegenen mechanischen Eigenschaften aus.

Die erfindungsgemäß verwendeten Polyolefinwerkstoffe sind Homo- oder Copolymerisate des Ethylens und/oder Propylens, wobei als Comonomere 1-Alkene wie Propen, Buten, Hexen, Okten, und dergleichen eingesetzt werden. Insbesondere bevorzugt sind Homopolymere des Ethylens mit hoher Dichte (HDPE) sowie hochdichte Ethylen-Copolymerisate unter Verwendung von Buten und/oder Hexen als Comonomere.

Die Polyolefinwerkstoffe zur Verwendung in erfindungsgemäßen Kunststoffhohlkörpern werden unter Verwendung eines hier beschriebenen Chrom-Katalysators hergestellt. Hierzu werden im Stand der Technik bekannte Katalysatoren mittels geeigneter Flourierungsmittel fluormodifiziert. Übliche Chromhaltige Polymerisationskatalysatoren, die Kieselgel oder modifiziertes Kieselgel als Trägermaterial und Chrom als katalytisch aktive Komponente enthalten, sind als sogenannte Phillips-Katalysatoren bei der Herstellung von hochdichtem Polyethylen seit langem Stand der Technik. Phillips-Katalysatoren werden vor der Polymerisation im Regelfall bei hohen Temperaturen aktiviert, um Chrom auf der Katalysatoroberfläche als Chrom(VI)-Spezies zu stabilisieren. Diese Spezies wird durch Zugabe von Ethylen oder Reduktionsmitteln reduziert, um die katalytisch aktive Chrom-Spezies auszubilden.

Zur Herstellung erfindungsgemäßer Kunststoffhohlkörpern verwendbare Polyolefinmaterialien, insbesondere Polyethylenwerkstoffe, werden mittels der hier beschriebenen fluormodifizierten heterogenen Chrom-Katalysatoren erzeugt.

Als Katalysatoren eignen sich mit Luft aktivierte Kieselgel-geträgerte Chrom-Katalysatoren, die mit geeigneten anorganischen Fluorierungsmitteln modifiziert werden. Insbesondere geeignet sind kugelförmige Trägermaterialien auf der Basis von Kieselsäure-Hydrogelen mit relativ hohem Feststoffgehalt von 10 bis 25% (berechnet als SiO₂). Diese Trägermaterialien werden nachfolgend mit geeigneten Chromverbindungen beladen und im wasserfreien, 10 Vol. %igen Sauerstoffstrom bei 400 bis 1100°C aktiviert.

Die Herstellung geeigneter Katalysatoren ist beispielsweise in der DE 25 40 279 beschrieben und wird hiermit einbezogen, wobei hier die zusätzlich notwendige Fluoriddotierung wahlweise bei der Herstellung von Katalysatorvorstufen (d.h. während des Imprägnierungsschrittes) oder während des Aktivierungsschrittes im Aktivator erfolgt, beispielsweise durch Coimprägnierung des Trägers mit einer Lösung des Fluorierungsmittels und der gewünschten Chromverbindung, oder durch Zusatz vor Fluorierungsmitteln im Gassstrom während der Luftaktivierung.

Geeignete Fluorierungsmittel zur Dotierung von Chrom-Trägerkatalysatoren sind alle üblichen Fluorierungsmittel wie ClF₃, BrF₃, BrF₅, Ammoniumhexafluorosilicat (NH₄SiF₆), Ammoniumtetrafluoroborat (NH₄BF₄), Ammoniumhexafluoroaluminat (NH₄AlF₆), NH₄,HF₂, Ammoniumhexafluoroplatinat (NH₄PtF₆), Ammoniumhexafluorotitanat (NH₄TiF₆), Ammoniumhexafluorozirkonat (NH₄ZrF₆), und dergleichen. Besonders bevorzugt sind mit Ammoniumhexafluorosilicat dotierte Chrom-Trägerkatalysatoren.

Die Herstellung erfindungsgemäß verwendbarer Polyolefine mittels der hier beschriebenen ChromKatalysatoren erfolgt nach den üblichen Polymerisationsverfahren des Standes der Technik, beispielsweise durch Suspensionspolymerisation oder auch durch Trockenphasenpolymerisation, gerührte Gasphasenpolymerisation, Gasphasenwirbelschichtpolymerisation, oder Lösungspolymerisation. Diese Verfahren können sowohl in Einstranganlagen, als auch in Reaktorkaskadenanlagen durchgeführt werden.

Mit den hier beschriebenen Chrom-Katalysatoren hergestellte Polyolefine weisen ein ausgewogenes Eigenschaftsprofil auf. Unter Verwendung fluordotierter Chrom-Katalysatoren hergestellte Copolymerisate des Propylens oder Ethylens mit ä-Olefinen führt zu hervorragend verarbeitbaren Polymeren mit niedriger Fließrate. Analog hergestelltes Polyethylen weist gegenüber mit nicht dotierten Katalysatoren hergestelltem Polyethylen eine engere Molekulargewichtsverteilung auf, die sich erstaunlicherweise nicht auf die Verarbeitungseigenschaften des Materials auswirkt.

Die Dichte erfindungsgemäß verwendbarer Polyethylenhomo- oder copolymerisate, die unter Verwendung von fluordotierten Chrom-Katalysatoren hergestellt wurden, liegt im Bereich zwischen 0,943 und 0,955 g/cm², insbesondere zwischen 0,945 und 0,953 g/cm².

Die Fließeigenschaften erfindungsgemäß verwendbarer Materialien sind durch eine Schmelzfließrate MFR (190°C/21,6 kg) von 2 bis 8 g pro 10 Minuten charakterisiert. Bevorzugt sind Materialien mit Schmelzfließraten von 3 bis 7 g pro 10 Minuten, insbesondere von 4 bis 6 g pro 10 Minuten.

Mit diesen Materialien lassen sich Kunststoffhohlkörper mit ein- oder mehrschichtigem Aufbau herstellen, die eine deutlich erhöhte Bauteilfestigkeit aufweisen. Dies rührt insbesondere von der hohen Spannungsrißbeständigkeit sowie der gleichzeitigen hohen Schlagzähigkeit der erfindungsgemäß verwendeten, fluor-katalysierten Polyolefine her.

Erfindungsgemäße Kunststoffhohlkörper können ein- oder mehrschichtig aufgebaut sein, wobei mindestens eine Schicht aus einem Polyolefinmaterial besteht, das mittels eins fluormodifizierten Chrom-Katalysators hergestellt wurde.

Erfindungsgemäß bevorzugt ist ein mehrschichtiger Aufbau, wobei zur Permeationsminderung flüchtiger Stoffe mindestens eine Barriereschicht, bestehend aus einem polaren Barrierepolymer, zusätzlich enthalten ist. Der mehrschichtige Aufbau beispielsweise einer Kunststoffkraftstoffbehälterwand hat insbesondere den Vorteil, daß die permeationsmindernde Barriereschicht, welche aufgrund ihrer Materialeigenschaften zur Verschlechterung der Verarbeitungsbedingungen und/oder der mechanischen Eigenschaften des fertigen Bauteils führt, zwischen zwei Polyolefinschichten eingebaut werden kann, die mittels der hier beschriebenen Katalysatoren hergestellt wurden. Dies hat zur Folge, daß insbesondere beim Coextrusionsblasformen die Verarbeitungseigenschaften eines derartigen mehrschichtigen Materials hauptsächlich von den günstigen Eigenschaften des Polyolefins beeinflußt werden. Darüber hinaus bestimmen die Stoffeigenschaften des Polyolefins maßgeblich die mechanischen Eigenschaften des gesamten Bauteils, so daß erfindungsgemäße Kunststoffhohlkörper mit deutlich erhöhter Bauteilfestigkeit erhalten werden können.

Die Basisschicht kann aber auch durch Beschichtungsverfahren, wie z.B. Fluorierung, Lackierung oder Plasmapolymerisation auf die Oberfläche des HDPE aufgebracht werden.

In besonders bevorzugten Ausführungsformen erfindungsgemäßer Kunststoffhohlkörper ist ein sechsschichtiger Aufbau vorgesehen, der von innen nach außen folgende Schichten umfaßt: Polyolefin (erfindungsgemäß), Haftvermittler, Barriereschicht, Haftvermittler, Mahlgut, Polyolefin (erfindungsgemäß).

Insbesondere bevorzugt ist die Verwendung von mittels der hier beschriebenen Chrom-Katalysatoren hergestellten Polyethylens hoher Dichte (HDPE).

Die Dicken der Schichten betragen im gleicher Reihenfolge, jeweils bezogen auf die Gesamtdicke der Behälterwand, Polyolefin (bzw. HDPE) 10-40%, Haftvermittler 1-5%, Barrierepolymer 1-10%, Haftvermittler 1-5%, Mahlgutschicht 10-82%, Polyolefin (bzw. HDPE) 5-30%.

Erfindungsgemäß verwendbare Barrierepolymere sind beispielsweise Ethylenvinylalkohol copolymere, Polyvinylalkohol, Polyester, Polyamid, Fluorpolymere (z.B. PTFE, PVDF) und dergleichen. Besonders bevorzugte Barrierepolymere sind Ethylenvinylalkoholcopolmere wie z.B. die kommerziell verfügbaren Typen EVAL^{®} (Firma Kuraray) und Soarnol^{®} (Firma Elf Atochem), sowie Polyamide, z.B. Ultramid^{®} (BASF).

Erfindungsgemäß verwendbare Haftvermittler sind solche Stoffe, die geeignet sind, die Verträglichkeit bzw. die Anbindung des Barrierepolymeren an das Polyolefin zu gewährleisten. Bevorzugte Haftvermittler basieren auf Blockcopolymerisaten des Maleinsäureanhydrids mit HDPE, LDPE oder LLDPE. Beispiel hierfür ist das unter dem Namen Admer^{®} GTSE von der Firma Mitsui vertriebene Polymer.

Das Material des Mahlgutes besteht aus Mischungen geeigneter Kunststoffe, die in der Regel als Abfälle bei der Kunststoffverarbeitung anfallen. Bevorzugt enthält das Mahlgut als Hauptanteil HDPE zusammen mit typischen Barrierepolymeren. Die Mahlgutschicht wird bevorzugt aus sogenannten Butzen erzeugt, die beispielsweise bei der Herstellung der Kunststoffhohlkörper als Polymerreste anfallen.

Die erfindungsgemäßen Kunststoffhohlkörper werden bevorzugt durch Koextrusionsblasformen hergestellt.

Erfindungsgemäße Kunststoffhohlkörper können für eine Vielzahl von Anwendungen und Produkten verwendet werden. Dies sind insbesondere Kunststoffkraftstoffbehälter im Automobilbau, Kanister und Tanks aller Art zur Lagerung und zum Transport von Benzin, Heizöl, Diesel und dergleichen, Lösungsmittel (Sammel)behälter, Kunststofflaschen für Flüssigkeiten und fluide Feststoffe, Transportbehälter auf Nutzfahrzeugen, beispielsweise für Spritzmittel zur Verwendung in der Landwirtschaft, Lösemittelbehälter, etc.

Anhand der folgenden, nicht beschränkend gedachten Beispiele soll die Erfindung näher erläutert werden. In den Beispielen wird insbesondere gezeigt, daß aus Materialien, die mit den beschriebenen Chrom-Katalysatoren hergestellt werden, Kunststoffhohlkörper mit besonderen guten mechanischen Eigenschaften hergestellt werden können. Die zur Beschreibung der Produkte erforderlichen Daten wurden gemäß ISO wie angegeben bestimmt.

Das Verarbeitungsverhalten wird auf einer Blasformmaschine zum einen durch den Massedruck am Extruder der PE-Innenschicht und zum anderen durch die Grundspaltöffnung der Düse beschrieben. Der Grundspalt dient zum Erreichen der erforderlichen Schlauchdicke: Je kleiner der Grundspalt, desto höher ist das Schwellen das Materials unter den Verarbeitungsbedingungen.

Es wurden erfindungsgemäße Kunststoffkraftstoffbehälter zur Anwendung als Tank im Automobilbau hergestellt. Die Tanks werden im Falltest auf ihre Schockbeanspruchbarkeit überprüft. Hierzu werden von jedem Tanktyp jeweils 8 Tanks mit einem Glycol-Wasser-Gemisch gefüllt und auf -40°C abgekühlt. Die Tanks werden aus 6 m Höhe aus 4 verschiedenen Position fallengelassen. Für jede Fallposition wird eine Doppelprüfung mit 2 Tanks durchgeführt. Die Auswertung erfolgt, indem die Zahl der Abwürfe ohne Bruch zur maximalen Zahl der Abwürfe (hier 8) ins Verhältnis gesetzt und als Prozentwert angegeben werden.

Zur Prüfung der Spannungsrißbeständigkeit der Tanks werden diese mit einem Netzmittel (hier 5% Nekanil W in Wasser) gefüllt, und unter einem Druck von 0,3 bar 80 Stunden bei 50°C gelagert. Der Test gilt als erfüllt, wenn in dieser Zeit keine Undichtigkeiten auftreten.

Der Brandtest erfolgte gemäß ECE R34 in einer Original-Pkw-Karosserie. Zusätzlich zur eigentlichen ECE-Prüfung, welche eine direkte Beflammung von 60 Sekunden und dann eine indirekte Beflammung von 60 Sekunden vorsieht, wurde in weiteren Versuchen die Zeit der direkten Beflammung schrittweise in 6 Sekunden-Schritten erhöht. Die im folgenden angegebenen Werte sind die Brandzeiten, bei denen der Tank noch leckfrei blieb, dividiert durch die im Bereich der Schadstelle vor dem Brandversuch gemessene Wanddicke.

### Beispiel 1

Unter Verwendung eines fluormodifizierten Kieselgel-geträgerten Chrom-Katalysators, hergestellt in Analogie zum in der DE 25 40 279 beschriebenen Verfahren, wobei die Fluormodifizierung durch Coimprägnierung des Trägermaterials mit Chromverbindung und Ammoniumhexafluorosilicat und nachfolgender Luftaktivierung des Katalysators bei 610°C in einem Wirbelschichtaktivator erfolgt, wurde ein Ethylen-Hexen-Copolymerisat hergestellt. Die Polymerisation erfolgt in einem 30 m3 Phillips-Schleifenreaktor. Die Einstellung der Schmelzfließrate und der Dichte erfolgte über die Reaktortemperatur, sowie die Hexen- und Ethylenkonzentration im Suspensionsmittel (Isobutan). Der Reaktordruck betrug 39 bar. Die Polymerisationsdaten sind aus der Tabelle 1 zu entnehmen.

Das auf diese Weise hergestellte Polyethylencopolymerisat wurde auf einer Coextrusionsblasformanlage KBS 2 der Fa. Krupp Kautex zu Kunststoffkraftstoffbehältern mit einem sechsschichtigen Aufbau verarbeitet. Von innen nach außen wurde folgende Schichtabfolge gewählt (Schichten in Prozent, bezogen auf die Gesamtdicke der Behälterwand):

| | |
|---|---|
| Polyethylen (erfindungsgemäß) | 33% |
| Haftvermittler (Admer^{®} GT5E Fa. Mitsui): | 2% |
| Barriereschicht (EVAL^{®} F 101 Fa. Kuraray): | 3% |
| Haftvermittler (Admer^{®} GT5E Fa. Mitsui): | 2% |
| Mahlgut: | 45% |
| Polyethylen (erfindungsgemäß) | 15% |

Die Tanks besitzen ein Leergewicht von 6,5 kg.

### Beispiel 2 (Vergleichsbeispiel)

Es wurden Kunststoffkraftstoffbehältern nach den analogen Bedingungen wie in Beispiel 1 hergestellt. Als Katalysator wurde ein gemäß der DE 25 40 279 ohne Fluormodifizierung hergestellter Katalysator eingesetzt. Die Aktivierung des Katalysators erfolgte bei 600°C in einem Wirbelschichtaktivator durch Luft. Die Polymerisation wurde wie in Beispiel 1 durchgeführt. Die Polymerisationsdaten sind der Tabelle 1 zu entnehmen.

Das auf diese Weise hergestellte Produkt wurde wie oben beschrieben zu coextrusionsblasgeformten Tanks mit einem Leergewicht von 6,5 kg verarbeitet.

### Beispiel 3 (Vergleichsbeispiel)

In diesem Beispiel wurde zur Herstellung der coextrusionsblasgeformten Kunststoffkraftstoffbehälter handelsübliches Polyethylen (Lupolen^{®} 4261 AG der Fa. BASF) verwendet. Herstellung und Schichtaufbau der Tanks erfolgte wie in Beispiel 1 angegeben.

**Tabelle 1: Polymerisationsdaten und Polymereigenschaften**

| | Einheit | Beispiel 1 | Beispiel 2 (Vergleichsbeispiel) | Beispiel 3 (Vergleichsbeispiel) |
|---|---|---|---|---|
| Reaktortemp. | °C | 103,5 | 104,5 | 103,2 |
| Ethenkonzentration | Vol.% | 12,5 | 9,0 | 10,0 |
| Hexenkonzentration | Vol.% | 0,12 | 0,15 | 0,30 |
| Produktivität | kg PE/kg Kat. | 5500 | 4000 | 4800 |
| Ausstoß | kg/h | 6000 | 5500 | 5000 |
| Schüttdichte | g/l | 500 | 495 | 495 |
| MFR (190°C/21,6kg) | g/10 min (ISO 1133) | 4,7 | 6 | 6 |
| Dichte | g/cm³ (ISO 1183) | 0,951 | 0,951 | 0,945 |

Die Verarbeitungseigenschaften sowie die Eigenschaften der fertigen Bauteile sind in Tabelle 2 aneinander gegenübergestellt.

**Tabelle 2: Verarbeitungsbedingungen und Bauteileigenschaften**

| | Einheit | Beispiel 1 | Beispiel 2 (Vergleichsbeispiel) | Beispiel 3 (Vergleichsbeispiel) |
|---|---|---|---|---|
| Massedruck (PE-Innenschicht) | bar | 138 | 132 | 136 |
| Massetemperatur (PE-Innenschicht) | °C | 221 | 222 | 218 |
| Grundspalt | % | 18 | 19 | 19 |
| Falltest (-40°C) | % | 88 | 75 | 75 |
| ESCR | | + | + | + |
| Brandtest (ECE | | + | + | + |
| R 34) | sek/min | 42,9 | 37,5 | 41,3 |
| R-Wert* | | 2,43 | 2,39 | 2,4 |

| | | | | |
|---|---|---|---|---|
| + = bestanden * R-Wert-Messungen gemäß Angaben in EP 645 400 B1 | | | | |

Es fällt auf, daß die Schockbeanspruchbarkeit gemäß Falltest bei erfindungsgemäßen Kunststoffkraftstoffbehälter laut Tabelle 2 deutlich größer ist als bei den Vergleichsbeispielen. Ferner fällt auf, daß obwohl der R-Wert des erfindungsgemäßen Kunststoffkraftstoffbehälters unterhalb des von der EP 645 400 als Mindestwert genanntem Wert von 2,5 liegt, Bauteile mit deutlich verbessertem Eigenschaftsprofil erhalten werden können.

## Patentansprüche

1. Kunststoffhohtkörper mit mehrschichtigem Aufbau und mindestens einer Öffnung, **dadurch gekennzeichnet, dass** der Kunststoffhohlkörper mit mehrschichtigem Aufbau mindestens eine Schicht aus einem Polyolefin mit einer Dichte im Bereich zwischen 0,943 und 0,955 g/cm³ und einer Schmelzfließrate MFR (190 °C/21,6 kg) von 2 bis 8 g/10 min aufweist, das mit in Luft aktivierten Kieselgel-geträgerten Chrom-Katalysatoren hergestellt wurde, die mit geeigneten anorganischen Fluorierungsmitteln bei der Herstellung von Katalysatorvorstufen oder während des Aktivierungsschrittes modifiziert werden.

2. Kunststoffhohlkörper nach Anspruch 1, **dadurch gekennzeichnet, daß** das Polyolefin ein Homopolymer oder Copolymer des Ethylens umfaßt.

3. Kunststoffhohlkörper nach einem der vorgenannten Ansprüche, **dadurch gekennzeichnet, daß** das Polyolefin ein Copolymer des Ethylens umfaßt, wobei als Comonomer ein α-Olefin mit 3 bis 8 Kohlenstoffatomen verwendet wird.

4. Kunststoffhohlkörper nach Anspruch 3, **dadurch gekennzeichnet, daß** das Copolymer 1-Buten oder 1-Hexen umfaßt.

5. Kunststoffhohlkörper nach einem der vorgenannten Ansprüche, **dadurch gekennzeichnet, daß** die Dichte des verwendeten Polyolefins zwischen 0,945 und 0,953 g/cm³ aufweist.

6. Kunststoffhohlkörper nach einem der vorgenannten Ansprüche, **dadurch gekennzeichnet, daß** das Polyolefin eine Schmelzfließrate MFR (190°C/21,6 kg) von 3 bis 7 g/10 Minuten aufweist.

7. Kunststoffhohlkörper nach einem der vorgenannten Ansprüche, **dadurch gekennzeichnet, daß** der Kunststoffhohlkörper eine permeationsmindernde Beschichtung aufweist.

8. Kunststoffhohlkörper nach einem der vorgenannten Ansprüche, **dadurch gekennzeichnet, daß** der Kunststoffhohlkörper mehrschichtig aufgebaut ist und von innen nach außen eine Polyolefinschicht, eine Haftvermittlerschicht, eine Barrierepolymerschicht, eine Haftvermittlerschicht, eine Mahlgutschicht und eine Polyolefinschicht umfaßt.

9. Verwendung des Kunststoffhohlkörpers nach einem der vorhergehenden Ansprüche, als Kunststoffkraftstoffbehälter in Kraftfahrzeugen.

10. Verwendung des Kunststoffhohlkörpers nach einem der vorhergehenden Ansprüche als Benzinkanister, Kunststofftank zur Lagerung und zum Transport von Kraftstoffen, Diesel, Heizöl und dergleichen, Transportbehälter auf Nutzfahrzeugen, beispielweise für landwirtschaftliche Spritzmittel, Lösemittelbehälter, Lösungsmittelbehälter, Kunststofflaschen und dergleichen.

## Claims

1. A hollow plastics article whose structure has more than one layer and which has at least one opening, wherein the hollow plastics article whose structure has more than one layer has at least one layer made from a polyolefin having a density of from 0.943 to 0.955 g/cm³ and a melt flow rate MFR (190°C/21.6 kg) of from 2 to 8 g/10 min, and has been produced by using silica-gel-supported chromium catalysts which have been activated in air and which are modified by using suitable inorganic fluorinating agents in the production of catalyst precursors or during the activation step.

2. The hollow plastics article according to claim 1, wherein the polyolefin comprises a homopolymer or copolymer of ethylene.

3. The hollow plastics article according to either of the preceding claims, wherein the polyolefin comprises a copolymer of ethylene, in which an a-olefin having from 3 to 8 carbon atoms is used as comonomer.

4. The hollow plastics article according to claim 3, wherein the copolymer comprises 1-butene or 1-hexene.

5. The hollow plastics article according to any of the preceding claims, wherein the density of the polyolefin used is from 0.945 to 0.953 g/cm³.

6. The hollow plastics article according to any of the preceding claims, wherein the polyolefin has a melt flow rate MFR (190°C/21.6 kg) of from 3 to 7 g/10 minutes.

7. The hollow plastics article according to any of the preceding claims, which has a permeation-reducing coating.

8. The hollow plastics article according to any of the preceding claims, wherein the structure of the hollow plastics article has more than one layer and comprises, from the inside to the outside, a polyolefin layer, an adhesion promoter layer, a barrier polymer layer, an adhesion promoter layer, a regrind layer, and a polyolefin layer.

9. The use of the hollow plastics article according to any of the preceding claims as a plastic fuel tank in a motor vehicle.

10. The use of the hollow plastics article according to any of the preceding claims as a fuel canister, fuel tank for storage and transport of fuels, diesel, heating oil or the like, a transport container on utility vehicles, such as those for agricultural sprays, solvent containers, plastics bottles, or the like.

## Revendications

1. Corps creux en matière plastique à structure multicouche et comportant au moins un orifice, **caractérisé en ce que** le corps creux en matière plastique à structure multicouche comporte au moins une couche d'une polyoléfine ayant une densité dans la plage comprise entre 0,943 et 0,955 g/cm³ et un indice de fluidité à chaud MFR (190 °C/21,6 kg) de 2 à 8 g/10 min, qui a été produite avec des catalyseurs au chrome fixés sur support en gel de silice, activés à l'air, qui sont modifiés avec des agents de fluoration inorganiques appropriés, lors de la préparation des précurseurs de catalyseurs ou pendant l'étape d'activation.

2. Corps creux en matière plastique selon la revendication 1, **caractérisé en ce que** la polyoléfine comprend un homopolymère ou copolymère de l'éthylène.

3. Corps creux en matière plastique selon l'une quelconque des revendications précédentes, **caractérisé en ce que** la polyoléfine comprend un copolymère de l'éthylène, dans lequel une α-oléfine ayant de 3 à 8 atomes de carbone est utilisée en tant que comonomère.

4. Corps creux en matière plastique selon la revendication 3, **caractérisé en ce que** le copolymère comprend le 1-butène ou le 1-hexène.

5. Corps creux en matière plastique selon l'une quelconque des revendications précédentes, **caractérisé en ce que** la densité de la polyoléfine utilisée est comprise entre 0,945 et 0,953 g/cm³.

6. Corps creux en matière plastique selon l'une quelconque des revendications précédentes, **caractérisé en ce que** la polyoléfine présente un indice de fluidité à chaud MFR (190 °C/21,6 kg) de 3 à 7 g/10 minutes.

7. Corps creux en matière plastique selon l'une quelconque des revendications précédentes, **caractérisé en ce que** le corps creux en matière plastique comporte un revêtement réduisant la perméation.

8. Corps creux en matière plastique selon l'une quelconque des revendications précédentes, **caractérisé en ce que** le corps creux en matière plastique a une structure multicouche et comporte de l'intérieur vers l'extérieur une couche de polyoléfine, une couche de promoteur d'adhérence, une couche barrière en polymère, une couche de promoteur d'adhérence, une couche de matière broyée et une couche de polyoléfine.

9. Utilisation du corps creux en matière plastique selon l'une quelconque des revendications précédentes, en tant que réservoir de carburant en matière plastique dans des véhicules automobiles.

10. Utilisation du corps creux en matière plastique selon l'une quelconque des revendications précédentes, en tant que bidon à essence, réservoir en matière plastique pour le stockage et pour le transport de carburants, de gazole, de fioul et similaires, conteneur sur véhicules utilitaires, par exemple pour des produits agricoles à pulvériser, récipients à dissolvants, récipients à solvants, bouteilles en matière plastique et similaires.
